# EUROPÄISCHE PATENTSCHRIFT

(11) **EP 3 821 777 B1**
(45) Veröffentlichungstag und Bekanntmachung des Hinweises auf die Patenterteilung: **01.01.2025**
(21) Anmeldenummer: 19208500.9
(22) Anmeldetag: 12.11.2019
(51) Int. Cl.: A47L 9/14

(54) **STAUBSAUGERFILTERBEUTEL FÜR EINEN HANDSTAUBSAUGER**
VACUUM CLEANER FILTER BAG FOR A HAND VACUUM CLEANER
SAC FILTRANT D'ASPIRATEUR POUR UN ASPIRATEUR À MAIN

(43) Veröffentlichungstag der Anmeldung: 19.05.2021
(73) Patentinhaber: Eurofilters Holding N.V., 3900 Overpelt (BE)
(72) Erfinder: SCHULTINK, Jan, 3900 Overpelt (BE); SAUER, Ralf, 3900 Overpelt (BE)
(74) Vertreter: Grünecker Patent- und Rechtsanwälte PartG mbB

(56) Entgegenhaltungen:
- EP-A1- 2 772 173
- EP-A2- 0 100 438
- WO-A1-2007/059937
- DE-A1- 2 140 894
- DE-U- 1 934 708
- DE-U1- 202008 018 054
- DE-U1- 8 703 012
- DE-U1- 9 403 072
- SE-A1- 1 250 019
- US-A1- 2005 081 321
- US-A1- 2017 296 014

## Beschreibung

Die Erfindung betrifft einen Staubsaugerfilterbeutel, insbesondere einen Staubsaugerfilterbeutel für einen Handstaubsauger und/oder einen sogenannten Stick-Staubsauger, insbesondere für kabellose Modelle.

Stick-Staubsauger sind meist, jedoch nicht immer, schnurlose Geräte (Akkusauger) bei denen eine Elektrobürste über ein Saugrohr ohne Saugschlauch mit dem eigentlichen Gehäuse des handgehaltenen Staubsaugers verbunden ist. Diese Geräte sind sehr leicht und handlich. Die Sticks weisen niedrige Aufnahmeleistungen im Bereich von etwa 150 bis 600 W auf. Die erzielten Volumenströme sind entsprechend niedrig und liegen in einer Größenordnung von 10 bis 30 I/s. Das Filtergehäuse ist typischerweise zylindrisch und hat ein geringes Volumen (ca. 1 bis 2 Liter). Meist wird als Filter ein Zyklonabscheider verwendet. Der Zyklonabscheider beschleunigt die Saugluft und die darin enthaltenen Partikel. Dadurch wird ein erheblicher Teil der zur Verfügung stehenden Leistung verbraucht und es bleibt nur wenig Leistung für die Erzeugung eines ausreichenden Volumenstroms übrig. Die Reinigungswirkung (Staubaufnahme) ist oft unbefriedigend.

Aus der SE 1 250 019 A1 ist eine Halteplatte für einen Staubsaugerbeutel bekannt, die reversibel mit dem Staubsaugerbeutel verbunden werden kann, wobei die äußere Kontur der Halteplatte an die Kontur der in einem Staubsauger vorhandenen Halteplatte angepasst werden kann.

Die EP 2 772 173 A1 offenbart einen Filterbeutel für einen Staubsauger, wobei ein Filtermaterial an einem plattenförmigen Teil festgelegt ist, während innerhalb einer kreisförmigen Einlassöffnung ein Kragen an dem plattenförmigen Teil festgelegt ist. Alternativ kann an einer einzigen ringförmigen Naht der Kragen mit dem Filtermaterial sowie dem plattenförmigen Teil verbunden werden, also nur eine Verbindungsstelle vorgesehen werden.

Ein Filterbeutel aus modernen Vliesstofflaminaten erfüllt die Abscheidung von Staub wesentlich energieeffizienter. Es ist allerdings schwierig einen Filterbeutel zu produzieren, der optimal in den sehr kleinen zur Verfügung stehenden Bauraum passt und eine ausreichende Filteroberfläche zur Verfügung stellt.

Klassische Flachbeutel, bei denen zwei Filtermaterialzuschnitte umlaufend verschweißt werden und eine Halteplatte flächig mit einem der Filtermaterialzuschnitte verbunden wird, sind üblicherweise ungeeignet, da der zur Verfügung stehende Bauraum zu klein ist. Daher finden bislang hauptsächlich Beutel mit Boden, etwa Klotzboden, Verwendung, bei denen die Halteplatte am Boden angeordnet ist, und deren Beutelform an den Bauraum angepasst ist (sogenannte "dreidimensionale" Beutel). Solche Beutel herzustellen, insbesondere mit einem heute gängigen Vliesstoffmaterial, erweist sich aber als schwierig. Daher sind bei der Herstellung solcher Beutel teilweise noch manuelle Fertigungsschritte erforderlich, was die Effizienz der Herstellung verringert.

Aufgabe der Erfindung ist es daher, einen einfach und automatisiert herstellbaren Staubsaugerfilterbeutel, insbesondere einen Staubsaugerfilterbeutel für einen Handstaubsauger und/oder einen Stick-Staubsauger, bereitzustellen, der den zur Verfügung stehenden Bauraum möglichst optimal nutzen kann.

Diese Aufgabe wird durch einen Staubsaugerfilterbeutel gemäß Anspruch 1 gelöst. Besonders vorteilhafte Weiterbildungen finden sich in den Unteransprüchen.

Die Erfindung stellt also einen Staubsaugerfilterbeutel bereit, umfassend eine Beutelwand und eine Halteplatte, wobei die Halteplatte mit einem wenigstens abschnittsweise zylindrischen Stutzen verbunden ist, der sich in einer Richtung senkrecht zu einer in der Halteplatte ausgebildeten Durchgangsöffnung erstreckt, wobei die Beutelwand entlang des Umfangs des Stutzens mit dessen Mantelfläche verbunden ist.

Dadurch, dass die Beutelwand über den wenigstens abschnittsweise zylindrischen Stutzen mit der Halteplatte und entlang des Umfangs des Stutzens mit dessen Mantelfläche verbunden ist, entfällt die aufwendige, und sonst oft nur manuell mögliche, Ausbildung eines Bodens bei der Herstellung. Dadurch kann der erfindungsgemäße Staubsaugerfilterbeutel effizienter hergestellt werden.

Der Staubsaugerfilterbeutel kann insbesondere für Handstaubsauger und/oder einen sogenannten Stick-Staubsauger, insbesondere für kabellose Modelle, vorgesehen sein. Das Füllvolumen kann daher im voll ausgefalteten Zustand zwischen 0,5 und 3 Litern, insbesondere zwischen 0,5 und 2 Litern liegen.

Die Halteplatte des Staubsaugerfilterbeutels kann an eine Halteeinrichtung in einem Staubsaugergehäuse anbringbar sein. Dadurch kann die Halteplatte im Staubsaugergehäuse in einer vorbestimmten Position anordenbar, insbesondere fixierbar, sein.

Im Gegensatz zu einem Flachbeutel, bei dem die Halteplatte mit einem flächigen Wandungsteil der Beutelwand verbunden wird, wird im Falle der Herstellung des erfindungsgemäßen Staubsaugerfilterbeutels die mit einer entsprechenden Öffnung versehene Beutelwand über den wenigstens abschnittsweise zylindrischen Stutzen gestülpt und mit dessen Mantelfläche verbunden. Dadurch erstreckt sich der Staubsaugerfilterbeutel im Wesentlichen parallel zur Längsachse des Stutzens und damit senkrecht zur Ebene der Halteplatte. Damit ist der Staubsaugerfilterbeutel auch besser an die üblichen Filtergehäuse von Handstaubsaugern und/oder Stick-Staubsaugern angepasst, welches typischerweise zylindrisch ausgebildet ist, und die Halteeinrichtung für die Halteplatte an einer der Deckflächen des Zylinders aufweisen.

Der wenigstens abschnittsweise zylindrische Stutzen umfasst eine Durchgangsöffnung, die mit der Durchgangsöffnung der Halteplatte bei Draufsicht auf die Halteplatte teilweise oder vollständig überlappt, sodass eine Einströmöffnung gebildet wird, über die staubbeladene Luft im Betrieb in das Innere des Staubsaugerfilterbeutels strömen kann. Die Längsachse des Stutzens ist hierin definiert als die Richtung, in der die Durchgangsöffnung im Stutzen verläuft. Diese Richtung ist insbesondere senkrecht zur Ebene in der die Durchgangsöffnung der Halteplatte angeordnet ist.

"Wenigstens abschnittsweise zylindrisch" bedeutet, dass der Stutzen wenigstens einen Abschnitt umfasst, der in Form eines Zylinders ausgebildet ist, also durch eine Mantelfläche und zwei Begrenzungsflächen definiert wird. Die zylindrische Form ist dabei nicht auf einen Kreiszylinder beschränkt. Der Querschnitt des zylindrischen Abschnitts, also die Leitkurve des allgemeinen Zylinders, kann beliebig geformt sein. Der Querschnitt des zylindrischen Abschnitts kann auch ein Polygon sein. In diesem Fall kann man auch von einem prismenförmigen Abschnitt sprechen. Der zylindrische Abschnitt kann insbesondere die Form eines geraden oder senkrechten Zylinders aufweisen, wobei die Mantellinien parallel zur Längsachse des Stutzens verlaufen.

Der Stutzen kann einen, insbesondere an den zylindrischen Abschnitt angrenzenden, zweiten Abschnitt mit gegenüber dem zylindrischen Abschnitt vergrößertem Umfang umfassen. Der zweite Abschnitt kann insbesondere über die Mantelfläche des zylindrischen Abschnitts nach außen überstehen. Der Stutzen kann im Bereich des zweiten Abschnitts mit der Halteplatte verbunden sein.

Die Halteplatte kann insbesondere ein flächiges Bauteil sein, insbesondere wobei dessen Ausdehnung in zwei Richtungen (Länge, Breite) wesentlich größer, insbesondere wenigstens dreimal größer, ist als in einer Richtung senkrecht dazu (Dicke). Die Halteplatte kann insbesondere die darin angeordnete Durchgangsöffnung vollständig umgeben.

Die Halteplatte und/oder der Stutzen können einen oder mehrere Kunststoffe umfassen oder aus einem oder mehreren Kunststoffen bestehen. Insbesondere können recyclierte Kunststoffe Verwendung finden, wie etwa recycliertes Polypropylen, rPP, und/oder recycliertes Polyethylenterephthalat, rPET. Die Halteplatte und der Stutzen können aus demselben Material gefertigt sein.

Die Halteplatte kann ein Verschlusselement zum Verschließen der Einströmöffnung umfassen. Dadurch kann das Sauggut insbesondere beim Entnehmen des Beutels im Beutelinneren zurückgehalten werden.

Die Halteplatte kann mit dem Stutzen insbesondere verklebt oder verschweißt sein. Auch eine, insbesondere zerstörungsfrei lösbare, formschlüssige Verbindung zwischen Halteplatte und Stutzen ist denkbar, beispielsweise über einen Bajonettverschluss. Durch letztere Maßnahme kann die Halteplatte wiederverwendbar gestaltet sein.

Die Halteplatte und der Stutzen sind somit zwei getrennt gefertigte Bauteile, die miteinander verbunden sind, insbesondere zerstörungsfrei lösbar oder nicht zerstörungsfrei lösbar.

Die Halteplatte kann außerdem eine die Durchgangsöffnung umgebende Dichtlippe umfassen. Die Dichtlippe kann ein thermoplastisches Elastomer umfassen, beispielsweise basierend auf Polypropylen, oder daraus bestehen. Die Dichtlippe soll das Austreten von Staub aus dem Staubsaugerfilterbeutel vermeiden oder begrenzen, indem sie den Bereich zwischen dem inneren Rand der Durchgangsöffnung und der Außenseite eines Anschlussstutzens des Staubsaugers abdichtet.

Die Halteplatte kann als Spritzgussteil oder als ein durch Thermoformen erzeugtes Teil ausgebildet sein. Die Halteplatte kann auch teilweise durch Spritzgießen und teilweise durch Thermoformen gefertigt sein. Der Stutzen kann ebenfalls als Spritzgussteil und/oder als ein durch Thermoformen erzeugtes Teil ausgebildet sein.

Die Beutelwand ist aus einem luftdurchlässigen Material gefertigt und kann mehrlagig aufgebaut sein. Man spricht im letzteren Fall auch von einem Laminat. Mehrere Lagen des Laminats, insbesondere jede Lage des Laminats, können dabei einen Vliesstoff und/oder ein Faservlies umfassen oder daraus bestehen.

Als Material für die Beutelwand, insbesondere für eine oder mehrere Lagen aus Vliesstoff oder Faservlies, können verschiedenste Kunststoffe verwendet werden, beispielsweise Polypropylen und/oder Polyester. Die Beutelwand kann ebenfalls Kunststoff-Recyclat und/oder recycliertes Material aus der Herstellung von Textilien (Textil Left-Over - TLO) umfassen oder daraus bestehen.

Für viele Kunststoff-Recyclate bestehen einschlägige internationale Normen. Für PET-Kunststoff-Recyclate ist beispielsweise die DIN EN 15353:2007 einschlägig. PP-Recyclate werden in DIN EN 15345:2008 charakterisiert. Zum Zwecke der entsprechenden speziellen Kunststoff-recyclate macht sich die vorliegende Patentanmeldung die Definitionen dieser internationalen Normen zu Eigen. Die Kunststoff-Recyclate können dabei unmetallisiert sein. Ein Beispiel hierfür sind aus PET-Getränkeflaschen zurückgewonnene Kunststoffflakes oder -chips. Ebenso können die Kunststoff-Recyclate metallisiert sein, z.B. wenn die Recyclate aus metallischen Kunststofffolien erhalten wurden, insbesondere metallisierten PET-Folien (MPET).

Recycliertes Polyethylenterephthalat (rPET) kann beispielsweise aus Getränkeflaschen, insbesondere aus sog. Bottleflakes, also Stücke gemahlener Getränkeflaschen, erhalten werden.

Die recyclierten Kunststoffe, insbesondere recycliertes PET und/oder recycliertes PP, sowohl in der metallisierten, als auch in der nicht metallisierten Fassung, können zu den entsprechenden Fasern versponnen werden, aus denen die entsprechenden Stapelfasern bzw. Meltblown- oder Spunbond-Vliesstoffe für die Zwecke der vorliegenden Erfindung hergestellt werden können.

Recycliertes Material aus der Herstellung von Textilien (TLO) fällt insbesondere bei der Prozessierung von Textilmaterialien (insbesondere Textilfasern und -filamenten, sowie damit hergestellte linienförmige, flächenförmige und räumliche textile Gebilde), wie beispielsweise der Herstellung (umfassend Kardieren, Spinnen, Schneiden und Trocknen) oder dem Recyceln von Textilmaterialien an. Diese pulver- und/oder faserförmigen Materialien stellen Abfallmaterialien dar, die sich auf den zur Verarbeitung der Textilien verwendeten Maschinen oder Filtermaterialien absetzen können. Die Stäube (Pulver) bzw. Fasern werden normalerweise entsorgt und thermisch verwertet.

Bei dem pulver- und/oder faserförmigen recyclierten Material handelt es sich also beispielsweise um Produktionsabfall; dies gilt insbesondere für Material, das beim Kardieren, Spinnen, Schneiden oder Trocknen von Textilmaterialien als Abfallprodukt anfällt. Man spricht in diesem Fall auch von "pre-consumer waste".

Bei dem Recycling von Textilmaterialien, also der Verarbeitung (bspw. dem Zerkleinern) von gebrauchten Textilmaterialien oder Textilien (bspw. Altkleidern) entsteht ebenfalls pulver- und/oder faserförmiges recycliertes Material; hier spricht man von "post-consumer waste".

Das recyclierte Material aus der Herstellung von Textilien, TLO, kann also insbesondere Fasern und oder Filamente, die aus Abfallmaterialien aus der Textil- und Bekleidungsindustrie, aus Post-Consumer-Abfall (Textilien und ähnliches) und/oder aus Produkten, die für das Recycling gesammelt wurden, gewonnen wurden, umfassen.

Im Sinne der vorliegenden Erfindung bezeichnet ein Vliesstoff ein Wirrgelege, das einen Verfestigungsschritt durchlaufen hat, so dass es eine ausreichende Festigkeit aufweist, um zum Beispiel maschinell (also in industriellem Maßstab) zu Rollen auf- bzw. abgewickelt zu werden.

Die für ein Aufwickeln minimal erforderliche Bahnspannung beträgt 0,044 N/mm. Die Bahnspannung sollte nicht höher als 10% bis 25% der Mindesthöchstzugkraft (gemäß DIN EN 29073-3:1992-08) des aufzuwickelnden Materials betragen. Daraus resultiert eine Mindesthöchstzugkraft für ein aufzuwickelndes Material von 8,8 N pro 5 cm Streifenbreite.

Ein Faservlies oder kurz nur "Vlies" genannt entspricht einem Wirrgelege, das jedoch keinen Verfestigungsschritt durchlaufen hat, so dass im Gegensatz zu einem Vliesstoff ein derartiges Wirrgelege keine ausreichende Festigkeit aufweist, um zum Beispiel maschinell zu Rollen auf- bzw. abgewickelt zu werden.

Der Begriff Vliesstoff ("Nonwoven") wird in anderen Worten gemäß der Definition nach ISO Standard ISO9092:1988 bzw. CEM Standard EN29092 verwendet. Details zur Verwendung der hierin beschriebenen Definitionen und/oder Verfahren lassen sich auch dem Standardwerk "Vliesstoffe", W. Albrecht, H. Fuchs, W. Kittelmann, Wiley-VCH, 2000, entnehmen.

Die Vliesstofflagen der Beutelwand können insbesondere ein Stapelfaservliesstoff und/oder einen Extrusionsvliesstoff umfassen. Insbesondere können Filamentspinnvliesstoffe (auch kurz "Spinnvliesstoff" oder "Spunbond") und/oder Meltblown-Vliesstoff Verwendung finden.

Eine oder mehrere Lagen der Beutelwand können ein kardiertes Material umfassen. Als Bindeschritt kommen dabei sowohl mechanische Verfahren (z.B. Vernadeln) als auch thermische Verfahren (z.B. Kalandrieren) in Frage. Ebenfalls möglich ist die Verwendung von Bindefasern oder Klebemitteln, etwa einem Latexkleber. Auch Airlaid Materialien sind möglich.

Der Vliesstoff einer oder mehrerer Lagen der Beutelwand kann Bikomponentenfasern umfassen. Bikomponentenfasern (BiCo-Fasern) können aus einem Kern sowie einem den Kern umhüllenden Mantel gebildet sein. Neben Kern/Mantel Bikomponentenfasern können auch die anderen gebräuchlichen Varianten von Bikomponentenfasern, z. B. side-by-side, verwendet werden.

Die Bikomponentenfasern können als Stapelfasern vorliegen oder als Filamente bei einem Extrusionsvliesstoff (beispielsweise Meltblownvliesstoff) ausgebildet sein.

Entsprechend unverfestigte Faservliese sind wie erwähnt auch denkbar.

Der Vliesstoff einer oder mehrerer Lagen der Beutelwand kann außerdem eine Mikrokrempung (Micrex) aufweisen.

Die Beutelwand kann auch ein Geruchsabsorbens umfassen.

Die Beutelwand kann insbesondere eine Kapazitätslage umfassen. Eine Kapazitätslage bietet einen hohen Widerstand gegenüber Stoßbelastung, und ermöglicht ein Filtern von großen Schmutzpartikeln, ein Filtern eines signifikanten Anteils von kleinen Staubpartikeln und ein Speichern bzw. Zurückhalten von großen Mengen an Partikeln, wobei der Luft ein einfaches Durchströmen erlaubt wird, und somit ein geringer Druckabfall bei hoher Partikelbeladung resultiert.

Die Beutelwand kann auch eine Feinfilterlage umfassen. Eine Feinfilterlage dient der Erhöhung der Filtrationsleistung des mehrlagigen Filtermaterials durch Einfangen von Partikeln, die beispielsweise durch die Kapazitätslage hindurch gelangen. Zur weiteren Erhöhung der Abscheideleistung kann die Feinfilterlage bevorzugt elektrostatisch (z.B. durch Coronaentladung oder Hydrocharging) aufgeladen werden, um insbesondere die Abscheidung von Feinstaubpartikeln zu erhöhen.

Die Feinfilterlage kann sich insbesondere zur Außenseite der Beutelwand hin an die Kapazitätslage anschließen.

An die Feinfilterlage kann noch eine Stützlage anschließen. Eine Stützlage (manchmal auch "Verstärkungslage" genannt) ist dabei eine Lage, die dem mehrlagigen Verbund des Filtermaterials die notwendige mechanische Festigkeit verleiht. Bei der Stützlage kann es sich insbesondere um einen offenen, porösen Vliesstoff mit leichtem Flächengewicht handeln. Bei der Stützlage kann sich insbesondere um einen Spinnvliesstoff handeln.

Es ist aber auch möglich ein einlagiges Filtermaterial für die Beutelwand einzusetzen. In diesem Fall kann es sich insbesondere um einen Meltblown-Vliesstoff handeln. Ein geeignetes Material für eine solche einlagige Beutelwand ist beispielsweise aus der EP 2 311 360 B1 bekannt.

Die Beutelwand kann insbesondere mit der Außenseite des Stutzens, also mit der von der Durchgangsöffnung des Stutzens weg weisenden Seite verbunden sein. Dies ermöglicht bei der Herstellung eine vorteilhafte optische Kontrolle des Befestigungsprozesses, insbesondere visuell und/oder über automatisierte Bildverarbeitung.

Die Länge der mit dem Stutzen verbundenen Seite der Beutelwand kann insbesondere dem Außenumfang des zylindrischen Abschnitts des Stutzens entsprechen. Insbesondere kann die Beutelwand entlang des gesamten Umfangs des Stutzens mit dessen Mantelfläche verbunden sein. Sowohl die Beutelwand als auch die Mantelfläche des zylindrischen Abschnitts des Stutzens umgeben damit vollumfänglich die Durchgangsöffnung des Stutzens.

Die Beutelwand kann mit der Mantelfläche verklebt oder verschweißt sein, und/oder die Beutelwand kann zwischen der Mantelfläche und einem Klemmelement eingeklemmt sein. Bei dem Klemmelement kann es sich insbesondere um einen Hohlzylinder handeln. In diesem Fall kann man auch von einem Klemmring sprechen. Die Befestigung alleine über ein Klemmelement ermöglicht eine lösbare Verbindung und damit ein Wiederverwerten der Halteplatte und des Stutzens.

Die Halteplatte und der Stutzen können an einer kurzen Seite der Beutelwand angeordnet sein. Mit anderen Worten kann sich die Längsachse des Staubsaugerfilterbeutels parallel zur Längsachse des Stutzens erstrecken.

Die Beutelwand kann eine Oberflächenfaltung mit wenigstens fünf Falten aufweisen. Die Oberflächenfaltung des Filtermediums hat erhebliche Vorteile. Aufgrund der Oberflächenfaltung ist die durchströmte Fläche wesentlich größer als die reguläre für die Durchströmung zur Verfügung stehende Fläche (Anströmfläche). Durch die Oberflächenfaltung kann die Beutelwand mit anderen Worten wenigstens teilweise plissiert ausgebildet sein.

Der Begriff Faltung wird im Sinn der vorliegenden Erfindung als eine Abfolge von zwei oder mehreren Falten definiert, wobei eine einzelne Falte im Sinn der vorliegenden Erfindung jeweils durch zwei Faltenschenkel und ein Faltenscharnier definiert ist.

Eine Oberflächenfaltung ist eine Abfolge von Faltungen, die auf der Beutelwand vorgesehen ist. Eine derartige Oberflächenfaltung wird allenfalls durch einen Teil des Saums entlang einer Seitenkante fixiert. Dieser Teil des Saums ist aber weder ein Faltenscharnier noch ein Bestandteil des Faltenschenkels einer der Falten der Faltung.

Der Staubsaugerfilterbeutel, insbesondere dessen Beutelwand, kann außerdem wenigstens eine Seitenfaltung umfassen.

Eine Seitenfaltung ist eine Abfolge von Falten im Bereich der Seitenkante des Staubsaugerfilterbeutels. Der Saum entlang der betreffenden Seitenkante des Staubsaugerfilterbeutels ist hierbei ein Teil einer der die Seitenfaltung bildenden Falten; beispielsweise ist der Saum im Bereich der betreffenden Seitenkante ein Faltenscharnier oder der Saum liegt fast vollständig in einem Faltenschenkel.

Die wenigstens fünf Falten der Oberflächenfaltung können entlang der Längsachse des Filterbeutels verlaufen. Alternativ können die Falten aber auch quer zur Längsachse verlaufen.

Es kann außerdem eine Fixiervorrichtung vorgesehen sein, die verhindert, dass sich wenigstens eine der wenigstens fünf Falten vollständig entfaltet.

Die Falten einer Beutelwand können wenigstens teilweise mittels einer Fixiervorrichtung miteinander verbunden sein. Durch die Fixiervorrichtung können auch Falten der Beutelwand in einem vorherbestimmten Abstand zueinander gehalten werden.

Die Fixiervorrichtung kann wenigstens einen Materialstreifen, insbesondere einen Vliesstoffmaterialstreifen, umfassen oder aus wenigstens einem Materialstreifen, insbesondere wenigstens einem Vliesstoffmaterialstreifen, bestehen. Mehrere Materialstreifen können beabstandet zueinander angeordnet sein oder direkt aneinander angrenzen.

Mehrere Materialstreifen können quer, insbesondere senkrecht oder unter einem vorherbestimmten Winkel, zur Längsrichtung der Falten verlaufen. Der vorherbestimmte Winkel kann größer als 0° und kleiner als 180°, insbesondere größer als 30° und kleiner als 150°, sein.

Die Fixiervorrichtung ist vorzugsweise anströmseitig in Bezug auf die Beutelwand angeordnet. Anströmseitig bedeutet hier dem Inneren des Staubsaugerfilterbeutels zugewandt. Die Fixiervorrichtung kann wenigstens teilweise mit der Beutelwand, insbesondere mit den Falten der Beutelwand, verbunden, insbesondere unmittelbar verbunden, sein, insbesondere verklebt und/oder verschweißt sein. Ferner kann die Fixiervorrichtung an Stellen angeklebt und/oder angeschweißt sein, an denen Faltenschenkel zweier unterschiedlicher Falten der Beutelwand aneinandergrenzen.

Die Fixiervorrichtung kann mit der Beutelwand in einem oder mehreren Bereichen der Beutelwand verklebt und/oder verschweißt sein, die jeweils zwischen zwei Falten der Beutelwand angeordnet sind. Insbesondere bei liegenden Falten, die sich nicht gegenseitig überlappen, kann dadurch eine einfache Fertigung des Staubsaugerfilterbeutels erreicht werden.

Es können auch zwei oder mehr Falten der Beutelwand durch die Fixiervorrichtung miteinander verbunden sein, während zwei oder mehr Falten der Beutelwand nicht durch die Fixiervorrichtung miteinander verbunden sind.

Alternativ oder zusätzlich kann die Fixiervorrichtung derart mit einer oder mehreren Falten der Beutelwand verklebt und/oder verschweißt sein, dass sich die Verbindung im Betrieb des Staubsaugerfilterbeutels löst. Damit kann durch die sich wenigstens teilweise lösende Fixiervorrichtung der Luftstrom innerhalb des Staubsaugerfilterbeutels beeinflusst werden.

Mit anderen Worten können Teile der Fixiervorrichtung im Betrieb des Staubsaugerfilterbeutels als Luftverteiler dienen.

Die Oberflächenfalten, Seitenfalten und/oder Fixiervorrichtungen können insbesondere wie in der Europäischen Patentanmeldung EP 2 366 319 oder der Europäischen Patentanmeldung EP 2 366 320 beschrieben ausgebildet sein.

Die der Halteplatte gegenüberliegende Seite der Beutelwand kann konkav oder konvex ausgebildet sein. Dadurch kann eine bessere Bauraumausnutzung erzielt werden.

Die Erfindung stellt außerdem ein Verfahren zur Herstellung eines Staubsaugerfilterbeutels gemäß Anspruch 10 bereit, insbesondere zur Herstellung eines oben beschriebenen Staubsaugerfilterbeutels. Das erfindungsgemäße Verfahren umfasst also die folgenden Schritte:
a) Ausbilden eines an einer Seite offenen, schlauchförmigen Beutels eines Filtermaterials;
b) Anordnen eines wenigstens abschnittsweise zylindrischen Stutzens an dem breiten Ende eines konischen Führungselements, sodass der Stutzen an der Außenfläche des konischen Führungselements anliegt;
c) Überstülpen des Beutels über das konische Führungselement;
d) Verbinden des Beutels mit der vom Führungselement weg weisenden Mantelfläche des Stutzens;
e) Abheben des mit dem Stutzen verbundenen Beutels vom Führungselement; und
f) Verbinden des Stutzens mit einer Halteplatte.

Dieses Verfahren erlaubt eine effiziente und automatisierte Herstellung.

Das Ausbilden des an einer Seite offenen, schlauchförmigen Beutels kann ein Überlappen zweier Filtermaterialbahnen und Ausbilden zweier Längs- und einer Querschweißnaht, umfassen. Alternativ kann das Ausbilden des an einer Seite offenen, schlauchförmigen Beutels ein Umschlagen einer einzigen Filtermaterialbahn und Ausbilden einer Längsschweißnaht zum Verbinden zweier nach dem Umschlagen überlappender Ränder der Filtermaterialbahn sowie Ausbilden einer Querschweißnaht umfassen.

Das Ausbilden des an einer Seite offenen, schlauchförmigen Beutels kann außerdem ein Ausbilden der oben beschriebenen Oberflächenfaltung und/oder Seitenfaltung umfassen.

Die Oberflächenfaltung kann insbesondere entlang der Förderrichtung der Filtermaterialbahn eingebracht werden. Wenn die Falten entlang der Längsrichtung des Staubsaugerfilterbeutels verlaufen sollen, wird die offene Seite quer zur Förderrichtung der Filtermaterialbahn vorgesehen. Wenn die Falten quer zur Längsrichtung des Staubsaugerfilterbeutels verlaufen sollen, wird die offene Seite in Förderrichtung der Filtermaterialbahn vorgesehen.

Das konische Führungselement kann auf einem Arbeitstisch, insbesondere einem Drehtisch, angeordnet sein. Es können insbesondere mehrere konische Führungselemente vorgesehen werden, insbesondere entlang des Umfangs des Drehtisches. Der Radius des konischen Führungselements kann sich insbesondere von der Oberfläche des Arbeitstisches weg verringern.

Das konische Führungselement kann so ausgebildet sein, dass dessen Durchmesser an der Oberfläche des Arbeitstisches veränderbar oder einstellbar ist. Beispielsweise kann das konische Führungselement in einem Durchgangsloch des Arbeitstisches angeordnet und senkrecht zur Oberfläche des Arbeitstisches verfahrbar sein. Alternativ kann das konische Führungselement aus mehreren radial verschiebbaren Elementen gebildet werden.

Das Anordnen des wenigstens abschnittsweise zylindrischen Stutzens an dem breiten Ende eines konischen Führungselements kann ein Überstülpen des Stutzens über das konische Führungselement umfassen. Der Innendurchmesser des wenigstens abschnittsweise zylindrischen Stutzens, also der Durchmesser von dessen oben erwähnter Durchgangsöffnung, kann dem Außendurchmesser des konischen Führungselements an der Oberfläche des Arbeitstisches entsprechen, sodass der Stutzen an der Außenfläche des konischen Führungselements anliegt. Das konische Führungselement kann dafür an dessen breitem Ende einen zylindrischen Abschnitt aufweisen, dessen Form und Ausdehnung der Form und Ausdehnung des zylindrischen Abschnitts des Stutzens entspricht, wobei jedoch der Außenradius des zylindrischen Abschnitts des konischen Führungselements dem Innendurchmesser des zylindrischen Abschnitts des Stutzens entspricht.

Das Überstülpen des Beutels über das konische Führungselement kann ein Greifen und Öffnen des an einer Seite offenen, schlauchförmigen Beutels umfassen. Das Überstülpen des Beutels über das konische Führungselement kann insbesondere automatisiert durch einen Robotergreifer durchgeführt werden.

Bei quer zur Längsrichtung des Staubsaugerfilterbeutels vorgesehenen Falten, ist die offene Seite des Beutels in Förderrichtung der Filtermaterialbahn vorgesehen. In diesem Fall dreht der Robotergreifer den Beutel bevor er diesen über das konische Führungselement stülpt.

Bei in Längsrichtung des Staubsaugerfilterbeutels vorgesehenen Falten, ist die offene Seite des Beutels quer zur Förderrichtung der Filtermaterialbahn vorgesehen. In diesem Fall kann der Robotergreifer den Beutel in Förderrichtung der Filtermaterialbahn übernehmen und diesen über das konische Führungselement stülpen.

Das Verbinden des Beutels mit der vom Führungselement weg weisenden Mantelfläche des Stutzens kann insbesondere durch Ultraschallschweißen erfolgen. Das konische Führungselement bildet dabei den Amboss für die Sonotrode. Das Verschweißen kann in mehreren Schritten durchgeführt werden. Beispielsweise kann ein Drehtisch verwendet werden, um das konische Führungselement mit übergestülpten Beutel an unterschiedliche Schweißstationen zu verfahren, die so angeordnet und ausgebildet sind, dass sie unterschiedliche Segmente des Umfangs des Stutzens mit der Beutelwand verschweißen. Alternativ kann auch eine in Umfangsrichtung bewegliche Schweiß-Sonotrode verwendet werden.

Alternativ oder zusätzlich kann das Verbinden des Beutels mit der vom Führungselement weg weisenden Mantelfläche des Stutzens ein Anordnen eines Klemmelements über der Beutelwand umfassen, sodass die Beutelwand in einem Bereich der Mantelfläche des Stutzens zwischen der Mantelfläche des Stutzens und dem Klemmelement eingeklemmt wird.

Das Abheben des mit dem Stutzen verbundenen Beutels vom Führungselement kann wiederum automatisiert über einen Robotergreifer erfolgen. Das Abheben des mit dem Stutzen verbundenen Beutels vom Führungselement kann außerdem ein Verringern des Durchmessers des konischen Führungselements an der Oberfläche des Arbeitstisches umfassen, beispielsweise über ein Absenken des konischen Führungselements in einem Durchgangsloch des Arbeitstisches.

Das Verbinden des Stutzens mit einer Halteplatte kann wie oben ausgeführt ein Verkleben, Verschweißen und/oder formschlüssiges Verbinden umfassen.

Das Verfahren kann außerdem eine optische Kontrolle der Verbindung zwischen Beutelwand und Mantelfläche gemäß Schritt d) umfassen. Insbesondere kann wenigstens ein digitales Bild des Verbindungsbereichs der Beutelwand mit der Mantelfläche erzeugt werden. Dieses digitale Bild kann einer automatisierten Bildverarbeitung unterzogen werden, um Fehler an der Verbindung, beispielsweise unzureichend ausgebildete Schweißnähte, zu erkennen. Basierend auf dem Erkennen einer unzureichenden Verbindung kann ein Warnsignal ausgegeben und/oder der betreffende Beutel ausgeschleust werden.

Weitere Merkmale und Vorteile der Erfindung werden nachfolgend anhand der beispielhaften Figuren beschrieben. Dabei zeigt:
- Figur 1: einen Querschnitt durch einen beispielhaften Staubsaugerfilterbeutel;
- Figur 2: eine perspektivische Ansicht eines beispielhaften wenigstens abschnittsweise zylindrischen Stutzens;
- Figur 3: eine Draufsicht auf einen beispielhaften, an einer Seite offenen, schlauchförmigen Beutel zur Herstellung eines Staubsaugerfilterbeutels;
- Figur 4: eine perspektivische Ansicht eines beispielhaften konischen Führungselements zur Herstellung eines Staubsaugerfilterbeutels; und
- Figur 5: eine Illustration eines Fertigungsschrittes bei der Herstellung eines beispielhaften Staubsaugerfilterbeutels.

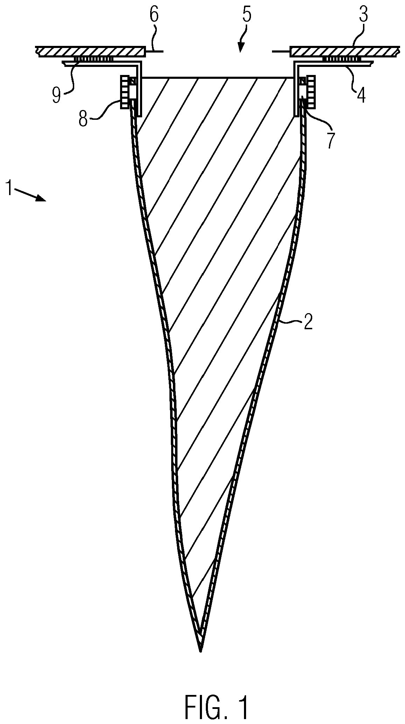

Figur 1 zeigt einen Querschnitt durch einen beispielhaften Staubsaugerfilterbeutel 1 mit einer Beutelwand 2 und einer Halteplatte 3. Die Halteplatte 3 dient der Fixierung des Staubsaugerfilterbeutels in einer korrespondierenden Halterung in einem Gehäuse eines Staubsaugers.

Die Beutelwand ist nicht, wie im Stand der Technik üblich, mit der Halteplatte direkt verbunden, sondern mit einem wenigstens abschnittsweise zylindrischen Stutzen 4. Insbesondere erstreckt sich der Stutzen in einer Richtung senkrecht zu einer in der Halteplatte 3 ausgebildeten Durchgangsöffnung 5, also senkrecht zur Ebene, in der die Durchgansöffnung 5 liegt. Die Beutelwand 2 ist entlang des Umfangs des Stutzens 4 mit dessen Mantelfläche verbunden, die sich ebenfalls in der Richtung senkrecht zu der in der Halteplatte 3 ausgebildeten Durchgangsöffnung 5 erstreckt.

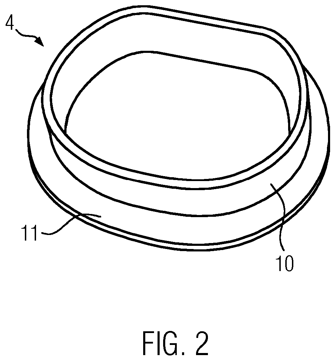

Figur 2 zeigt eine perspektivische Ansicht eines beispielhaften wenigstens abschnittsweise zylindrischen Stutzens 4. Der Stutzen 4 umfasst einen zylindrischen Abschnitt 10. Die Form des zylindrischen Abschnitts 10 kann frei gewählt werden und ist nicht auf die Form eines Kreiszylinders beschränkt. Die Achse des zylindrischen Abschnitts 10 definiert die Längsachse des Stutzens 4. Entlang dieser Längsachse des zylindrischen Abschnitts 10 ist eine Durchgangsöffnung vorgesehen. Zusammen mit der Durchgangsöffnung 5 der Halteplatte 3 bildet diese Durchgangsöffnung eine Einströmöffnung für das Sauggut in den Filterbeutel, wie in Figur 1 zu sehen.

Der beispielhafte Stutzen 4 der Figur 2 umfasst einen zweiten, an den zylindrischen Abschnitt 10 angrenzenden, Abschnitt 11 mit gegenüber dem zylindrischen Abschnitt 10 vergrößertem Umfang. Der zweite Abschnitt 11 steht insbesondere radial über die Mantelfläche des zylindrischen Abschnitts 10 nach außen über. Der Stutzen 4 kann im Bereich des zweiten Abschnitts 11 mit der Halteplatte 3 verbunden sein, wie in Figur 1 gezeigt.

Insbesondere zeigt Figur 1, dass der Stutzen 4 über eine Schweißnaht 9 mit der Halteplatte verbunden ist. Anstelle der Schweißnaht 9 könnte auch eine Klebeverbindung oder eine formschlüssige Verbindung verwendet werden.

Die Beutelwand 2 ist im Ausführungsbeispiel der Figur 1 mit der Mantelfläche des zylindrischen Abschnitts 10 des Stutzens 4 verschweißt. Insbesondere sind die Ultraschall-Schweißnähte 7 zu erkennen. Zusätzlich ist in diesem Ausführungsbeispiel ein Klemmring 8 gezeigt, der die Beutelwand 2 an die Mantelfläche des zylindrischen Abschnitts 10 des Stutzens 4 klemmt. Ein solcher Klemmring 8 kann auch alleine die Verbindung der Beutelwand mit der Mantelfläche herstellen.

Im Ausführungsbeispiel der Figur 1 ist noch eine Dichtlippe 6 an der Durchgangsöffnung 5 gezeigt.

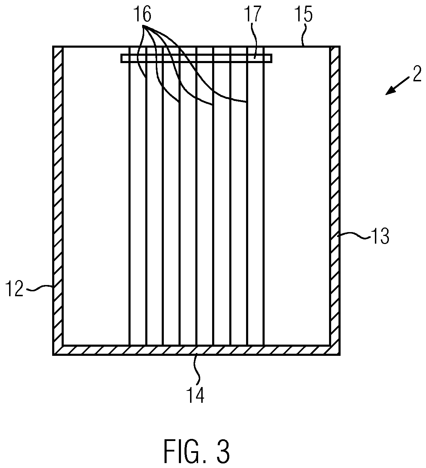

Figur 3 zeigt eine Draufsicht auf einen beispielhaften, an einer Seite offenen, schlauchförmigen Beutel, wie er bei der Herstellung eines Staubsaugerfilterbeutels nach Figur 1 Verwendung finden kann. Die Beutelwand 2 des beispielhaften Beutels der Figur 3 umfasst zwei Längsschweißnähte 12, 13 und eine Querschweißnaht 14. An der Querseite 15 ist der Beutel offen, also ohne Schweißnaht, um dort eine Verbindung mit einem Stutzen wie in Figur 2 beispielhaft gezeigt zu ermöglichen.

Die Querschweißnaht 14 könnte zur besseren Bauraumausnutzung auch konkav oder konvex gekrümmt ausgebildet sein. Auch ein Boden etwa in der Art eines Klotzbodens oder eine Seitenfalte wäre im Bereich der Querschweißnaht 14 denkbar.

Außerdem umfasst die Beutelwand 2 in Figur 3 mehrere Oberflächenfalten 16, die entlang der Längsschweißnähte 12, 13 verlaufen. Am offenen Ende 15 sind die Falten über eine Fixiervorrichtung 17 in ihrer Lage fixiert.

Wie oben bereits ausgeführt, wird der Begriff Faltung im Sinn der vorliegenden Erfindung als eine Abfolge von zwei oder mehreren Falten definiert, wobei eine einzelne Falte im Sinn der vorliegenden Erfindung jeweils durch zwei Faltenschenkel und ein Faltenscharnier definiert ist.

Unter einem Faltenscharnier wird der Punkt einer Falte mit dem geringsten Krümmungsradius verstanden. Durch die gedachte Verbindung der Faltenscharniere wird eine sogenannte Faltenachse erhalten. Die Faltenachse wird auch als Faltenrücken bezeichnet. Die Faltenachse kann der Längsachse einer Falte entsprechen. Bereiche einer Falte mit einem Krümmungsradius, der größer ist als der minimale Krümmungsradius der Falte, werden als Faltenschenkel bezeichnet. Der zwischen den Faltenschenkeln einer Falte liegende Bereich wird als Faltenkern bezeichnet. Die Faltenschenkel einer Falte können also insbesondere auch eine Krümmung aufweisen.

Falten können auch Wendepunkte aufweisen. Wendepunkte sind jene Stellen einer Falte, insbesondere der Faltenschenkel, an welchen sich die Krümmung der Falte von konkav zu konvex ändert. Eine Verbindungslinie, die mehrere Wendepunkte einer Falte verbindet, wird als Inflexionslinie (Wendelinie) bezeichnet.

Zwei benachbarte Falten können sich auch einen Faltenschenkel teilen. Sind mehrere Falten derartig vorgesehen, können ein Faltenpaket oder ein Faltenzug realisiert werden.

Mehrere Falten können auch zickzackförmig angeordnet sein.

Faltungen können auch Schenkel haben, die parallel zur Beutelwand verlaufen. Solche Schenkel können zwischen Falten, die aus der Beutelwandebene herausstehen und somit in Bezug auf die Beutelwand eine anströmseitige Öffnung aufweisen, liegen. Insbesondere kann dabei die Breite des parallelen Schenkels geringer als die, vorzugsweise geringer als die Hälfte der oder höchstvorzugsweise geringer als ein Viertel der, Breite der Öffnung der aus der Beutelwand herausstehenden Falte sein.

Die Faltenschenkel der Falten können insbesondere glatt sein. Unter "glatt" wird hierbei verstanden, dass die Faltenschenkel keine Verdichtungen und/oder Strukturierungen aufweisen, insbesondere die die Form der Falten stabilisieren sollen.

Ein oder mehrere Faltenschenkel einer oder mehrerer Falten können eine oder mehrere Prägestrukturen umfassen, insbesondere wobei die Prägestrukturen nicht zum Stabilisieren der Form der Falten dienen. Dadurch kann eine weitere Vergrößerung der zur Filtration zur Verfügung stehenden Fläche erreicht werden.

Die Beutelwand 2 kann insbesondere mehr als 5, 10, 20, 30, 40 oder 50 Falten, insbesondere auch Faltungen dieser Falten, aufweisen.

Die Falten der Beutelwand können einen im Wesentlichen regelmäßigen Abstand zueinander aufweisen. Mit anderen Worten kann der Abstand zwischen den Faltenrücken je zweier benachbarter Falten im Wesentlichen konstant sein.

Faltungen können liegend oder stehend ausgebildet sein. Unter liegenden Faltungen sind Faltungen zu verstehen, deren Faltenschenkel im Wesentlichen parallel zur Beutelwand 2 angeordnet sind. Unter stehenden Faltungen sind Faltungen zu verstehen, deren Faltenschenkel mit der Beutelwand 2 einen Winkel größer 0° und kleiner 180°, insbesondere größer 20° oder größer 45°, einschließen.

Unter einer stehenden Faltung wird auch eine Faltung verstanden, bei der eine Ebene, in der sowohl die Faltenachse als auch die Wendelinie der Falte liegt, mit einer ebenen, horizontalen Fläche, auf die erste und/oder zweite Beutelwand angeordnet wird, einen Winkel größer als 45°, insbesondere größer als 30°, insbesondere größer als 10° einschließt. Unter einer liegenden Faltung kann in diesem Fall eine Faltung verstanden werden, bei der die Ebene mit dieser Fläche einen Winkel kleiner als 45°, insbesondere kleiner als 30°, insbesondere kleiner als 10°, einschließt.

Zum Messen oder Bestimmen der oben genannten Winkel wird der Staubsaugerfilterbeutel, insbesondere das gefaltete Vliesstoffmaterial auf einer ebenen, horizontalen Fläche angeordnet. Dazu kann der Staubsaugerfilterbeutel auch aufgeschnitten werden und, insbesondere derart auf der Fläche angeordnet werden, dass die Anströmseite oder Innenseite des ursprünglichen Staubsaugerfilterbeutels auf der Fläche aufliegt.

Liegende Faltungen können sich gegenseitig überlappend, nicht überlappend und/oder teilweise überlappend ausgebildet sein.

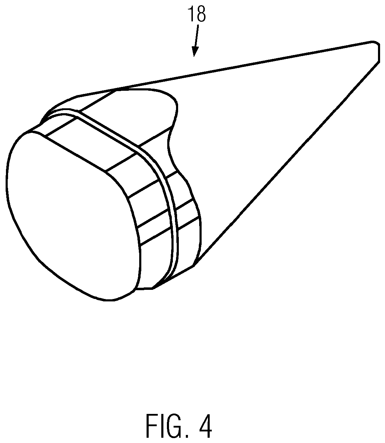

Zur Herstellung eines beispielhaften Staubsaugerfilterbeutels, wie in Figur 1 gezeigt, ist es erforderlich, die Beutelwand 2 mit dem Stutzen 4 zu verbinden. Obwohl der Stutzen 4 aus Kunststoff eine gewisse Festigkeit aufweist, ist es im Falle einer Verbindung durch Schweißen vorteilhaft, wenn ein Amboss vorgesehen wäre, der ein Widerlager bildet. Figur 4 zeigt einen solchen Amboss in Form eines konischen Führungselements 18.

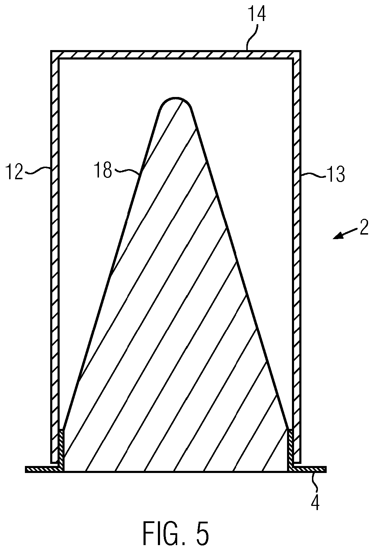

Wie in Figur 5 gezeigt kann das konische Führungselement 18 senkrecht auf einem Arbeitstisch angeordnet werden. Das konische Führungselement 18 ist so ausgebildet, dass dessen Außendurchmesser am breiten Ende dem Innendurchmesser des zylindrischen Abschnitts des Stutzens 4 entspricht. Der Stutzen 4 wird dann wie in Figur 5 gezeigt über das konische Führungselement 18 gestülpt. Ein Robotergreifer kann dann einen an einer Seite offenen, schlauchförmigen Beutel, wie beispielsweise in Figur 3 gezeigt, greifen und ebenfalls über das konische Führungselement 18 stülpen. Auch hierbei ist die konische Form des Führungselements 18 vorteilhaft. Daraufhin kann eine Verschweißung der Beutelwand 2 mit der Mantelfläche des zylindrischen Abschnitts 10 des Stutzens 4 erfolgen, und zwar von außen. Letzteres hat den Vorteil, dass das Schweißergebnis kontrolliert werden kann, beispielsweise über Bildverarbeitung.

Schließlich wird der Stutzen 4 und die damit verbundene Beutelwand 2 vom konischen Führungselement 18 abgezogen. Abschließend erfolgt eine Verbindung des Stutzens 4 mit einer Halteplatte 3, beispielsweise ebenfalls über Ultraschallverschweißen.

Es versteht sich, dass in den zuvor beschriebenen Ausführungsbeispielen genannte Merkmale nicht auf diese speziellen Kombinationen beschränkt und auch in beliebigen anderen Kombinationen möglich sind. Weiterhin versteht es sich, dass in den Figuren gezeigte Geometrien nur beispielhaft sind und auch in beliebigen anderen Ausgestaltungen möglich sind.

## Patentansprüche

1. Staubsaugerfilterbeutel (1) umfassend eine Beutelwand (2) und eine Halteplatte (3), wobei die Halteplatte (3) mit einem wenigstens abschnittsweise zylindrischen Stutzen (4) verbunden ist, der sich in einer Richtung senkrecht zu einer in der Halteplatte (3) ausgebildeten Durchgangsöffnung (5) erstreckt,
**dadurch gekennzeichnet, dass** die Beutelwand (2) entlang des Umfangs des Stutzens (4) mit dessen Mantelfläche verbunden ist, und
wobei die Beutelwand (2) mit der Mantelfläche verklebt oder verschweißt ist.

2. Staubsaugerfilterbeutel nach Anspruch 1, wobei die Beutelwand (2) zwischen der Mantelfläche und einem Klemmelement (8) eingeklemmt ist.

3. Staubsaugerfilterbeutel nach Anspruch 1 oder 2, wobei der Stutzen (4) mit der Halteplatte (3) verklebt oder verschweißt oder formschlüssig verbunden ist.

4. Staubsaugerfilterbeutel nach einem der vorangegangenen Ansprüche, wobei die Halteplatte (3) und der Stutzen (4) an einer kurzen Seite der Beutelwand (2) angeordnet sind.

5. Staubsaugerfilterbeutel nach einem der vorangegangenen Ansprüche, wobei die Beutelwand (2) eine Oberflächenfaltung (16) mit wenigstens fünf Falten aufweist.

6. Staubsaugerfilterbeutel nach Anspruch 5, wobei die wenigstens fünf Falten entlang der Längsachse oder quer zur Längsachse des Filterbeutels (1) verlaufen.

7. Staubsaugerfilterbeutel nach Anspruch 5 oder 6, wobei eine Fixiervorrichtung (17) vorgesehen ist, die verhindert, dass sich wenigstens eine der wenigstens fünf Falten vollständig entfalten.

8. Staubsaugerfilterbeutel nach einem der vorangegangenen Ansprüche, außerdem umfassend wenigstens eine Seitenfaltung.

9. Staubsaugerfilterbeutel nach einem der vorangegangenen Ansprüche, wobei die der Halteplatte gegenüberliegende Seite der Beutelwand (2) konkav oder konvex ausgebildet ist.

10. Verfahren zum Herstellen eines Staubsaugerfilterbeutels nach einem der vorangegangenen Ansprüche, umfassend die Schritte:
a) Ausbilden eines an einer Seite offenen, schlauchförmigen Beutels eines Filtermaterials;
b) Anordnen eines wenigstens abschnittsweise zylindrischen Stutzens (4) an dem breiten Ende eines konischen Führungselements (18), sodass der Stutzen (4) an der Außenfläche des konischen Führungselements (18) anliegt;
c) Überstülpen des Beutels über das konische Führungselement (18);
d) Verkleben oder Verschweißen des Beutels mit der vom Führungselement (18) weg weisenden Mantelfläche des Stutzens (4);
e) Abheben des mit dem Stutzen (4) verbundenen Beutels vom Führungselement (18); und
f) Verbinden des Stutzens (4) mit einer Halteplatte (3).

## Claims

1. A vacuum cleaner filter bag (1) comprising a bag wall (2) and a holding plate (3), the holding plate (3) being connected to a connecting piece (4) which is at least partially cylindrical and extends in a direction perpendicular to a through opening (5) formed in the holding plate (3), **characterized in that**
the bag wall (2) is connected to the circumferential surface of the connecting piece (4) along the periphery thereof, and
wherein the bag wall (2) is bonded or welded to the circumferential surface.

2. The vacuum cleaner filter bag according to claim 1, wherein the bag wall (2) is clamped between the outer surface and a clamping element (8).

3. The vacuum cleaner filter bag according to claims 1 or 2, wherein the connecting piece (4) is bonded or welded or positively connected to the holding plate (3).

4. The vacuum cleaner filter bag according to any one of the preceding claims, wherein the holding plate (3) and the connecting piece (4) are arranged at a short side of the bag wall (2).

5. The vacuum cleaner filter bag according to any one of the preceding claims, wherein the bag wall (2) includes surface pleats (16) consisting of at least five individual pleats.

6. The vacuum cleaner filter bag according to claim 5, wherein the at least five pleats extend along the longitudinal axis or transversely to the longitudinal axis of the filter bag (1).

7. The vacuum cleaner filter bag according to claims 5 or 6, wherein a fixing device (17) is provided which prevents at least one of the at least five pleats from unfolding completely.

8. The vacuum cleaner filter bag according to any one of the preceding claims, further comprising at least one gusset.

9. The vacuum cleaner filter bag according to any one of the preceding claims, wherein the side of the bag wall (2) opposite the holding plate is formed to be concave or convex.

10. A method for manufacturing a vacuum cleaner filter bag according to any one of the preceding claims, comprising the following steps:
a) forming a tubular bag of filter material open at one side;
b) arranging an at least partially cylindrical connecting piece (4) at the wide end of a conical guiding member (18) so that the connecting piece (4) abuts against the outer surface of the conical guiding member (18);
c) putting the bag over the conical guiding member (18);
d) bonding or welding the bag to the circumferential surface of the connecting piece (4) facing away from the guiding member (18);
e) lifting the bag connected to the connecting piece (4) off the guiding member (18); and
f) connecting the connecting piece (4) to a holding plate (3).

## Revendications

1. Sac filtrant pour aspirateur (1) comprenant une paroi de sac (2) et une plaque de maintien (3), dans lequel la plaque de maintien (3) est raccordée à un connecteur au moins partiellement cylindrique (4) qui s'étend dans une direction perpendiculaire à une ouverture traversante (5) formée dans la plaque de maintien (3),
**caractérisé en ce que** la paroi de sac (2) est raccordée par sa surface enveloppante sur le pourtour du connecteur (4), et
dans lequel la paroi de sac (2) est collée ou soudée à la surface enveloppante.

2. Sac filtrant pour aspirateur selon la revendication 1, dans lequel la paroi de sac (2) est serrée entre la surface enveloppante et un élément de serrage (8).

3. Sac filtrant pour aspirateur selon la revendication 1 ou 2, dans lequel le connecteur (4) est collé, soudé ou raccordé par engagement de forme à la plaque de maintien (3) .

4. Sac filtrant pour aspirateur selon l'une des revendications précédentes, dans lequel la plaque de maintien (3) et le connecteur (4) sont agencés sur un côté court de la paroi de sac (2).

5. Sac filtrant pour aspirateur selon l'une des revendications précédentes, dans lequel la paroi de sac (2) présente un pliage de surface (16) comportant au moins cinq plis.

6. Sac filtrant pour aspirateur selon la revendication 5, dans lequel lesdits au moins cinq plis s'étendent le long de l'axe longitudinal ou transversalement à l'axe longitudinal du sac filtrant (1).

7. Sac filtrant pour aspirateur selon la revendication 5 ou 6, dans lequel est pourvu un dispositif de fixation (17) qui empêche au moins l'un desdits au moins cinq plis de se déplier complètement.

8. Sac filtrant pour aspirateur selon l'une des revendications précédentes, comprenant en outre au moins un pliage latéral.

9. Sac filtrant pour aspirateur selon l'une des revendications précédentes, dans lequel le côté de la paroi de sac (2) opposé à la plaque de maintien est concave ou convexe.

10. Procédé de fabrication d'un sac filtrant pour aspirateur selon l'une des revendications précédentes, comprenant les étapes suivantes :
a) formation d'un sac tubulaire de matériau filtrant ouvert d'un côté ;
b) agencement d'un connecteur au moins partiellement cylindrique (4) sur l'extrémité large d'un élément de guidage conique (18), de telle sorte que le connecteur (4) repose sur la surface externe de l'élément de guidage conique (18) ;
c) enfilement du sac sur l'élément de guidage conique (18) ;
d) collage ou soudage du sac sur la surface enveloppante du connecteur (4) opposée à l'élément de guidage (18) ;
e) levage du sac raccordé au connecteur (4) depuis l'élément de guidage (18) ; et
f) raccordement du connecteur (4) à une plaque de maintien (3).
